# EUROPEAN PATENT SPECIFICATION

(11) **EP 1 841 128 B1**
(45) Date of publication and mention of the grant of the patent: **08.05.2013**
(21) Application number: 07103916.8
(22) Date of filing: 12.03.2007
(51) Int. Cl.: H04L 12/06

(54) **Communication terminal device with timestamp function**
Kommunikationsendgerät mit Zeitmarkenfunktion
Dispositif de terminal de communication avec fonction d'horodatage

(30) Priority: 31.03.2006 JP 2006096274
(43) Date of publication of application: 03.10.2007
(73) Proprietor: MURATA KIKAI KABUSHIKI KAISHA, Kyoto (JP)
(72) Inventor: Ishiyama, Katsunori, Kyoto 612-8686 (JP); Iida, Masahiro, Kyoto 612-8686 (JP)
(74) Representative: WP Thompson

(56) References cited:
- EP-A- 1 041 809
- EP-A2- 1 087 578
- US-A- 5 815 555
- US-A1- 2005 094 178

## Description

### BACKGROUND OF THE INVENTION

### 1. Field of the Invention

The present invention relates to a communication terminal device with a timestamp function, such as a digital Multi Function Peripheral (MFP), including a function for acquiring a timestamp from a Time Stamping Authority (TSA).

### 2. Description of the Related Art

In a communication terminal device such as a digital MFP, in a case in which a contract has been made to respond within a certain period of time after receiving a facsimile, i.e., in a case in which transmission time is important, the transmission time is certified by a journal function based on a transmission report and/or a communication management record.

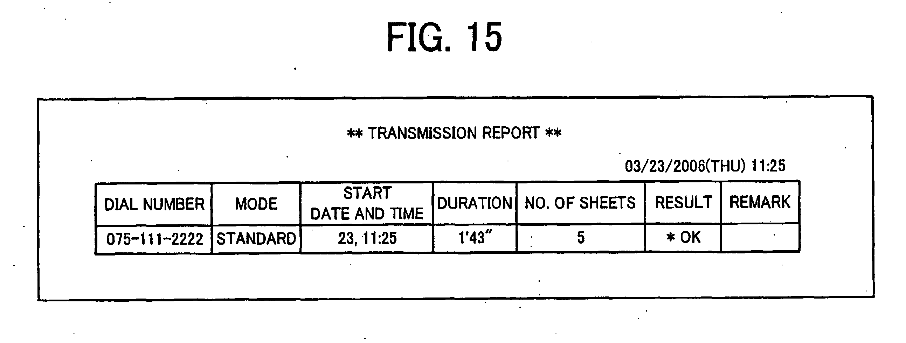

The transmission report is used for confirming that facsimile communication with a receiving side has been properly carried out. When facsimile transmission is properly carried out, and the transmission report is set to be output, a facsimile device on a transmitting side records the transmission report onto a recording paper after transmitting an image. As illustrated in Fig. 15, generally, a result report section including each of the following items is recorded on a transmission report: a title of the transmission report "**Transmission Report**", transmission date and time, the dial number of a transmission destination, the transmission mode, transmission start date and time, transmission duration, the number of transmitted sheets, the communication result, and a remark column.

Meanwhile, recently, a digital MFP including a copier function, a facsimile function, a printer function, and a scanner function or the like has assigned a timestamp to a document image scanned by a scanner, and stored the document image assigned with the timestamp as an e-document. That is, since digital data can be easily altered compared with a paper document, timestamp technology has been used. The timestamp is technology for certifying the time when an electronic document has been fixed. The timestamp certifies from when such a document has existed, and the fact that the document has not been altered by third parties and also the creator himself from the time when the document was created.

When adopting such timestamp technology, first, a hash value of an electronic document is transmitted to the TSA. The TSA encrypts the hash value along with information on accurate time clocked by an atomic clock, and returns the encrypted hash value and information as a timestamp. The returned timestamp is stored along with the electronic document.

When verifying an e-document, the timestamp is decrypted, timestamp time information is confirmed, and a separately calculated hash value of the electronic document is compared with the hash value included in the timestamp to determine whether or not the e-document has been altered. Further, the hash value is a fixed-length value generated using an irreversible one-way function (hash function) from a given original text. The hash value is also known as a message digest. Since it is extremely difficult to obtain the original text from the hash value or create different texts having the same hash value, it is possible to confirm whether or not the original text is identical by comparing the hash values.

As described above, in the communication terminal device such as a digital MFP, conventionally, the transmission time is confirmed by the communication management record and the transmission report. However, such confirmation is made based on an assumption that a clock of the device is operating normally. When clock data of the device is not accurate, communication log data of the device is not valid. In addition, the transmission time can be easily altered by altering time setting of the device, and such transmission time lacks credibility. Therefore, the communication management record and the transmission report cannot be used when an official certification is required, for example.

US2005/094178 discloses a data processing device which includes an image capturing unit for capturing an image so as to generate digital data, a time certification request unit for requesting time certification of the digital data in order to acquire time information regarding when time certification was performed, and a storage control unit for controlling the digital data associated with the time information to be stored in a storage destination.

### SUMMARY OF THE INVENTION

In order to overcome the above-described problems, preferred embodiments of the present invention provide a communication terminal device with a timestamp function which can officially certify communication completion time by using the above-described timestamp technology.

According to an aspect of the present invention, there is provided a communication terminal device as in claim 1 with a timestamp function, the communication terminal device comprising: a communication means for transmitting a document; a time certified document storing means for storing a time certified document; and a control means for assigning a timestamp to a document and storing the document assigned with the timestamp in the time certified document storing means, characterised in that: when transmitting a document, the control means assigns a timestamp to one of a data file including the transmitted document and a communication log added to the transmitted document or transmission report data of the document, and stores one of the data file or the transmission report data assigned with the timestamp in the time certified document storing means; and further characterised in that: said control means is arranged to assign a period for which the stored data file or transmission report data, to which a timestamp has been assigned, is stored in said time certified document storage means, and also arranged to assign a period for which the timestamp assigned to the storage data is valid.

Preferably, said period for which the stored data file or transmission report data, to which a timestamp has been assigned, is stored in said storage means, is user designated.

Conveniently, said control means is arranged to acquire said timestamp from a time stamping authority.

According to the above-described communication terminal device with the timestamp function, when transmitting a document, a data file in which a communication log is added to the transmitted document, or transmission report data of the document is assigned with a timestamp and stored. Therefore, the transmission time of the document can be certified, and the fact that the transmitted document, the communication log, or a transmission report has not been altered can also be certified.

According to the above-described communication terminal device with the timestamp function, when transmitting a document, time information or a timestamp acquired from the TSA is assigned to transmission report data. Therefore, credibility of time recorded on a transmission report can be increased.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 illustrates an example of a network configuration of a system including a digital MFP.

Fig. 2 is a block diagram illustrating a hardware structure of a digital MFP.

Fig. 3 illustrates a detailed structure of a display and operation unit.

Fig. 4 illustrates a file structure of an e-document storage unit.

Fig. 5 illustrates an example of data stored in a management file.

Fig. 6 illustrates an example of a facsimile transmitting function selection screen.

Fig. 7 illustrates an example of a scanning function selection screen.

Fig. 8 illustrates an example of a document selection screen of e-document scan.

Fig. 9 is a flowchart illustrating an operation carried out when a start key is pressed.

Fig. 10 illustrates an example of log file data composed of communication log data and image data transmitted by facsimile.

Fig. 11 illustrates an example of a facsimile transmitting function selection screen according to another

### preferred embodiment.

Fig. 12 is a flowchart illustrating an operation carried out when a start key is pressed according to another preferred embodiment.

Fig. 13 illustrates an example of transmission report data composed of a communication log and transmitted image data.

Fig. 14 illustrates an example of transmission report data assigned with time acquired from the TSA.

Fig. 15 illustrates an example of a conventional transmission report.

### DETAILED DESCRIPTION OF PREFERRED EMBODIMENTS

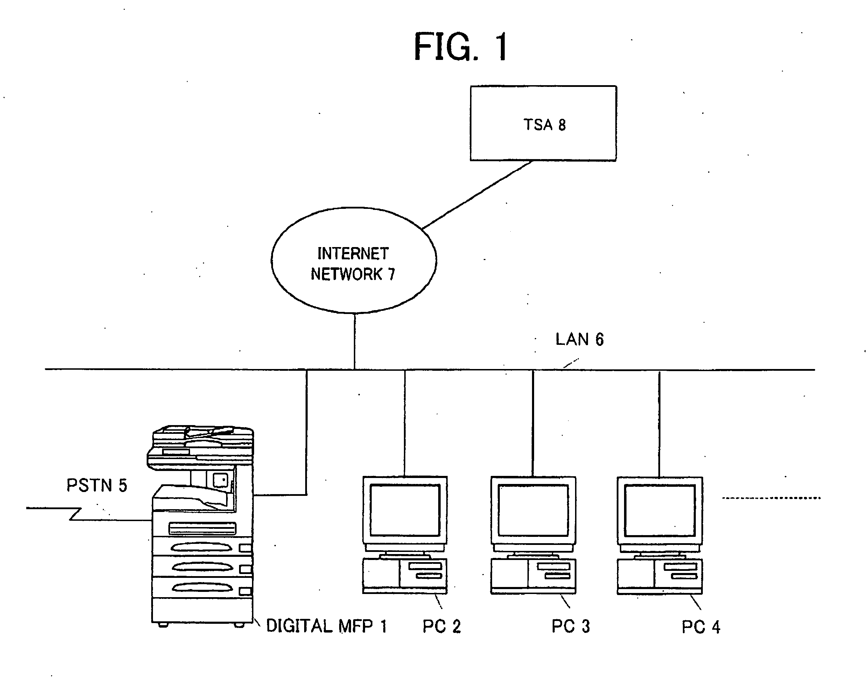

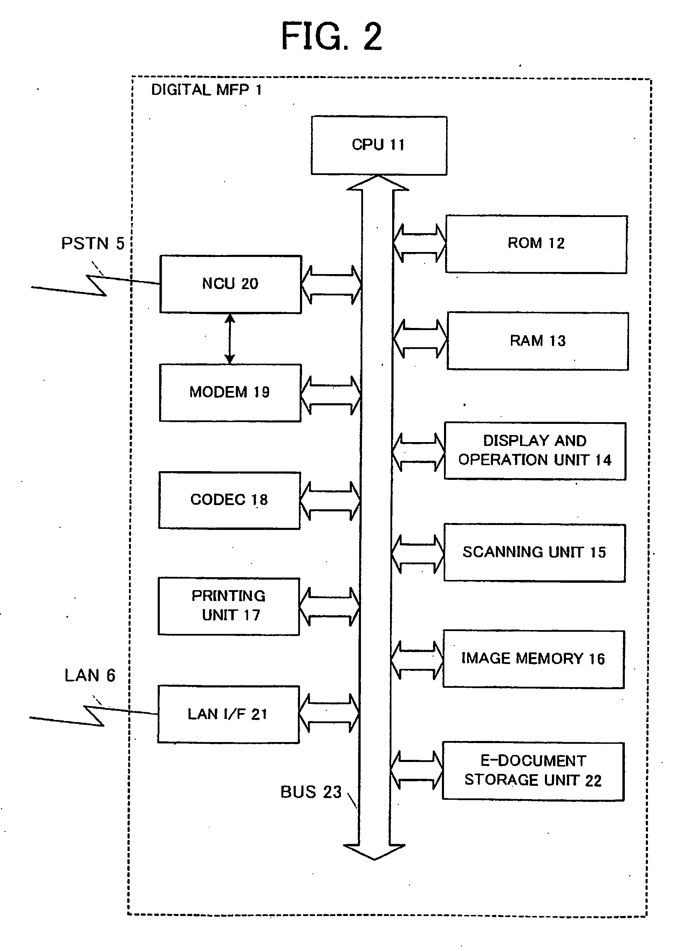

(First Preferred Embodiment) A description will be made of a digital MFP as an example of a communication terminal device with a timestamp function according to a preferred embodiment of the present invention. Fig. 1 illustrates an example of a network configuration of a system including a digital MFP. Fig. 2 is a block diagram illustrating a hardware structure of the digital MFP.

In Fig. 1, reference numeral 1 denotes a digital MFP, reference numerals 2, 3, 4, etc. respectively denote a Personal Computer (PC), reference numeral 5 denotes a Public Switched Telephone Network (PSTN), 6 denotes a Local Area Network (LAN), 7 denotes an Internet network, and 8 denotes a Time Stamping Authority (TSA). The digital MFP 1 includes functions of a copy mode, a printer mode, and a facsimile mode, and also includes a mail transmitting function. The digital MFP 1 is connected to the PSTN 5 and the LAN 6. A plurality of PCs 2, 3, 4, etc. as terminal devices are connected to the LAN 6. The LAN 6 is also connected to the Internet network 7. The digital MFP 1 can transmit and receive mail via the Internet network 7.

The TSA 8 is a time stamping authority. When the TSA 8 receives a hash value of scanned data from the digital MFP 1 via the Internet network 7, the TSA 8 encrypts the received hash value along with information on accurate time clocked by an atomic clock, and returns the encrypted hash value and information as a timestamp.

As illustrated in Fig. 2, the digital MFP 1 includes a Central Processing Unit (CPU) 11, a Read Only Memory (ROM) 12, a Random Access Memory (RAM) 13, a display and operation unit 14, a scanning unit 15, an image memory 16, a printing unit 17, a Coder-Decoder (CODEC) 18, a Modulator-Demodulator (MODEM) 19, a Network Control Unit (NCU) 20, a LAN interface (I/F) 21, and an e-document storage unit 22. Each of the units 11 to 22 is connected via a bus 23.

The CPU 11 controls each hardware component of the digital MFP 1 via the bus 23. The CPU 11 executes various programs in accordance with a program stored in the ROM 12. The ROM 12 previously stores various programs and operation messages or the like necessary for an operation of the digital MFP 1. The RAM 13 is formed of a Static RAM (SRAM) or the like. The RAM 13 stores temporary data generated when a program is executed, and stores communication log data.

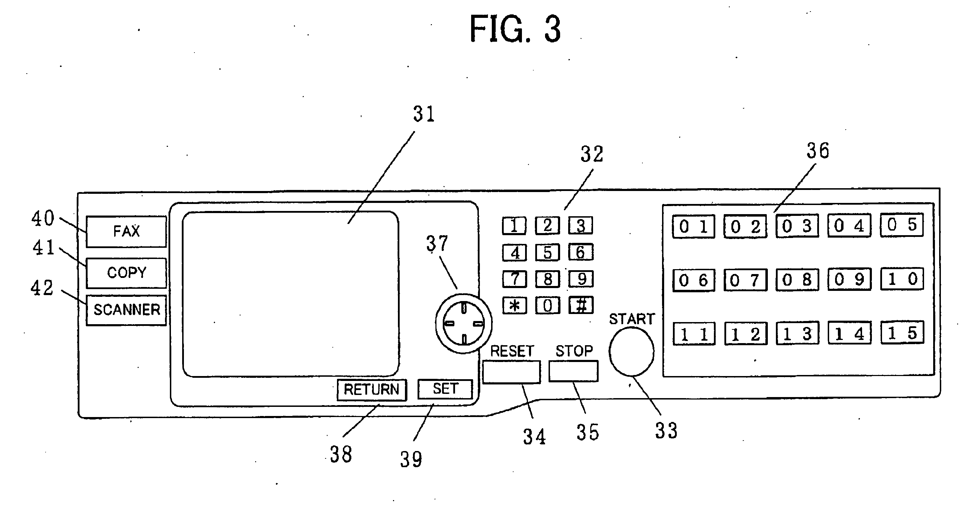

The display and operation unit 14 includes a display unit, which displays an operation status of the digital MFP 1 and displays an operation screen for various functions, and a plurality of keys for operating the digital MFP 1. As illustrated in Fig. 3, the display and operation unit 14 includes a Liquid Crystal Display (LCD) display unit 31 as the display unit and a plurality of operation keys. Touch-screen switches are provided to the LCD display unit 31. By pressing an item displayed on the LCD display unit 31, it becomes possible to select a corresponding item or to execute a function. As the operation keys, the display and operation unit 14 includes a ten-key numeric pad 32, a start key 33, a reset key 34, a stop key 35, a plurality of one-touch dial keys 36, a cross key 37, a return key 38, a set key 39, a FAX switching key 40, a copy switching key 41, and a scanner switching key 42 or the like. Further, the LCD display unit 31 may substitute a portion or all of these operation keys.

The scanning unit 15 includes an original placing table for an Auto Document Feeder (ADF) and/or a Flat Bed Scanner (FBS) or the like. The scanning unit 15 scans an original by a scanner using a Charge-Coupled Device (CCD) or the like, and outputs dot image data. The image memory 16 includes a Dynamic RAM (DRAM) or the like. The image memory 16 stores image data to be transmitted, received image data, or image data scanned by the scanning unit 15. The printing unit 17 includes an electrophotographic printer device. The printing unit 17 prints out received data, copied original data, or print data transmitted from the remote PCs 2, 3, 4, etc.

The CODEC 18 encodes and decodes according to a prescribed protocol. For transmitting image data scanned from an original, the CODEC 18 encodes the image data by the Modified Huffman (MH), the Modified Read (MR) or the Modified MR (MMR) scheme. The CODEC 18 decodes image data received from a remote terminal. The CODEC 18 also encodes and decodes according to the Tagged Image File Format (TIFF) scheme or the like, which is an image format generally used as a file attachable to electronic mail.

The MODEM 19 is connected to the bus 23, and includes functions as a faxmodem capable of carrying out facsimile communication. The MODEM 19 is also connected to the NCU 20, which is also connected to the bus 23. The NCU 20 is hardware for connecting and disconnecting an analog communication line. The NCU 20 connects the MODEM 19 to the PSTN 5 according to necessity. The LAN I/F 21 is connected to the LAN 6. The LAN I/F 21 receives a signal from the Internet network 7, and transmits a signal and/or data to the LAN 6. The LAN I/F 21 executes interface processing such as a signal conversion and a protocol conversion.

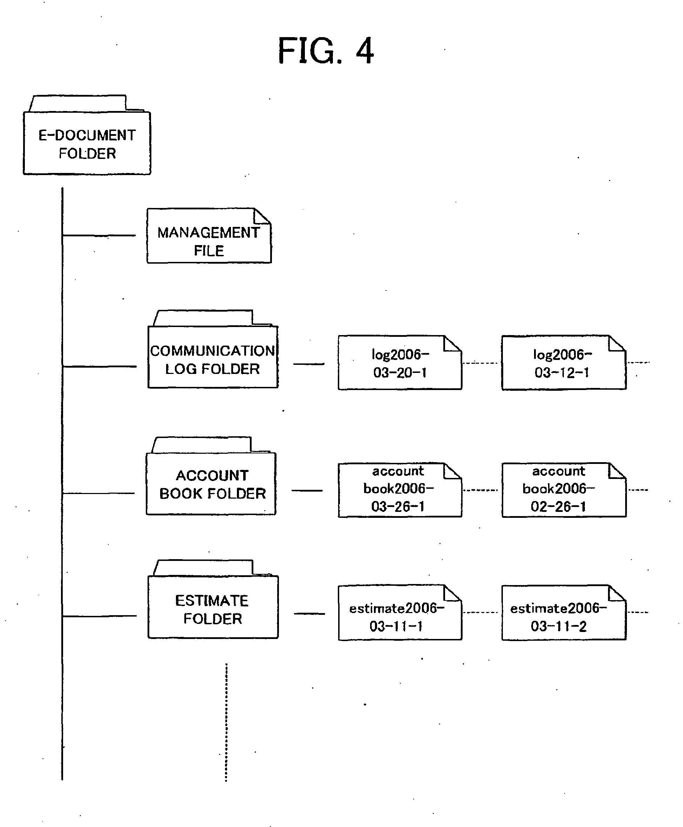

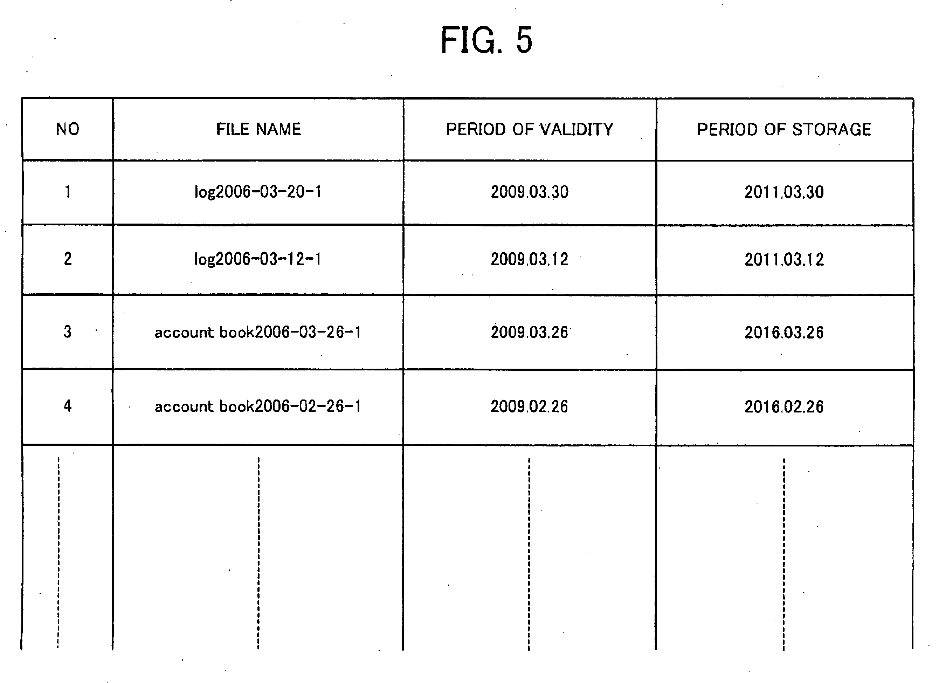

The e-document storage unit 22 is a storage unit which stores e-documents per document type. As illustrate in Fig. 4, the e-document storage unit 22 includes a management file of e-documents, a communication log folder, and folders for each of the following documents: account book, estimate, memorandum, and/or purchase order etc. Each document folder stores a file which includes a scanned document and a timestamp. The file is assigned with a file name including a character string, a date, and a consecutive number that are capable of identifying a document name. The communication log folder stores a file which includes data composed of transmitted image data and communication log data, and includes a timestamp, under a file name including a character string such as "log", a date, and a consecutive number. As illustrated in Fig. 5, the management file stores a file name of each e-document, a period of validity of a timestamp, and a period of storage of corresponding data.

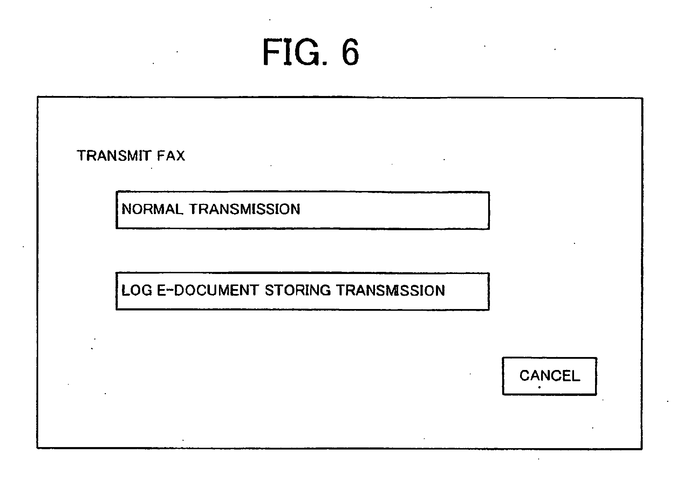

In the above-described digital MFP 1, when carrying out facsimile transmission, a user sets an original to be transmitted on the scanning unit 15, and presses the FAX switching key 40 on the display and operation unit 14. Accordingly, a facsimile transmitting function selection screen illustrated in Fig. 6 is displayed on the LCD display unit 31. At the facsimile transmitting function selection screen, either "normal transmission" or "log e-document storing transmission" can be selected. When the "log e-document storing transmission" is selected, the data composed of the transmitted image data and the communication log data, and the timestamp can be stored in the e-document storage unit 22. When the user presses and selects either the "normal transmission" or the "log e-document storing transmission", a transmission destination input field (not illustrated) is displayed on the LCD display unit 31. Accordingly, after inputting a dial number of a transmission destination by operating the ten-key numeric pad 32, or after selecting a transmission destination by operating one-touch dial keys 36, by pressing the start key 33, the facsimile transmission of image data of the original can be carried out.

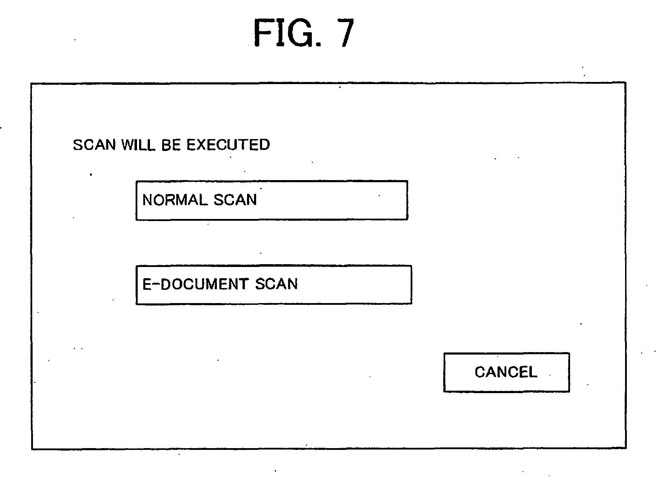

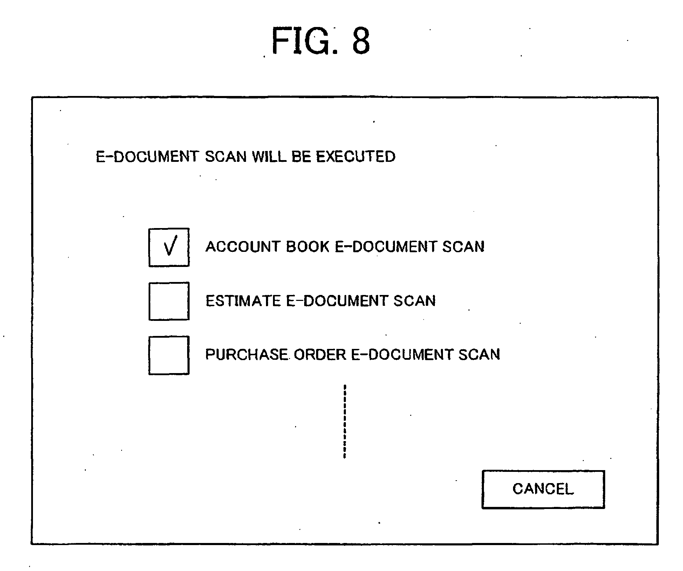

When converting a document into an e-document, the user presses the scanner switching key 42 on the display and operation unit 14, and accordingly, a scanning function selection screen illustrated in Fig. 7 is displayed on the LCD display unit 31. On the scanning function selection screen, selection buttons for normal scan and e-document scan are displayed. When the "normal scan" button is pressed on the screen, normal scan is executed, and when the "e-document scan" button is pressed on the screen, a document selection screen of e-document scan illustrated in Fig. 8 is displayed on the LCD display unit 31. The document selection screen displays a screen for selecting a document type to be executed with e-document scan, e.g. an account book e-document scan, an estimate e-document scan, and a purchase order e-document scan. When either one of the e-document scans is pressed and selected, by pressing the start key 33, the document is converted into the e-document.

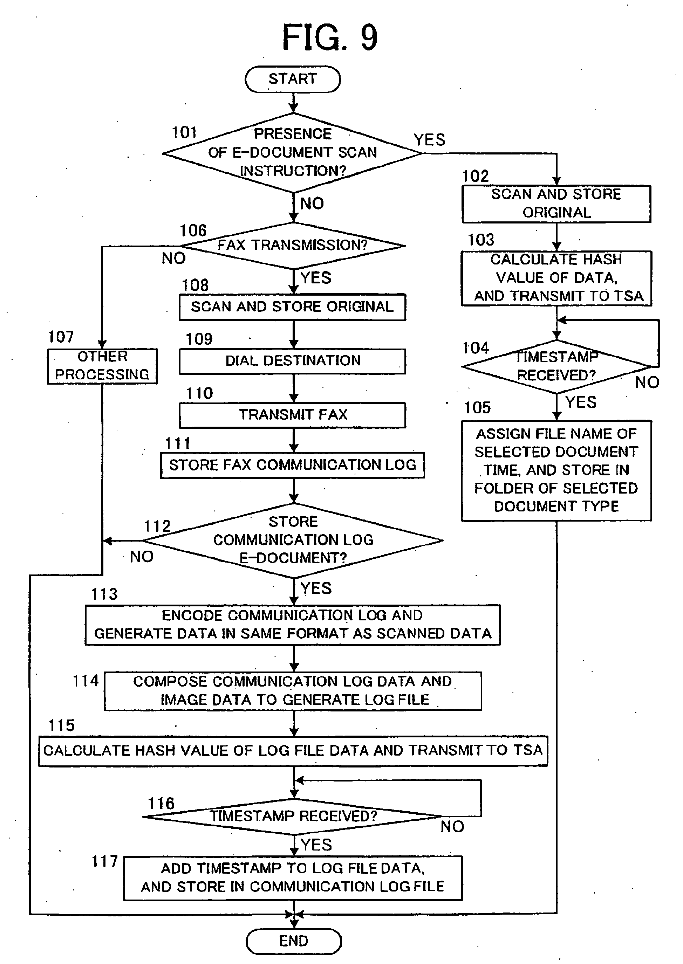

A description will be made of an operation of the CPU 11 carried out when the start key 33 is pressed with reference to a flowchart of Fig. 9. When the start key 33 on the display and operation unit 14 is pressed, the CPU 11 starts a program illustrated in the flowchart of Fig. 9, and determines whether or not the e-document scan has been instructed (step 101). When the user has selected the e-document scan on a scanning execution screen illustrated in Fig. 7, the CPU 11 scans image data of an original set on the scanning unit 15 by the scanning unit 15. Then, the scanned image data is compressed by the CODEC 18, and stored in the image memory 16 (step 102).

Next, the CPU 11 calculates a hash value of the image data stored in the image memory 16, and transmits the calculated hash value data to the TSA 8 via the LAN interface 21, the LAN 6, and the Internet network 7 (step 103). Then, the CPU 11 determines whether or not a timestamp has been received from the TSA 8 (step 104). When receiving the timestamp from the TSA 8, the CPU 11 creates a file name including a character string, a date, and a consecutive number that are capable of identifying a document name. Then, the CPU 11 stores the scanned data and the timestamp in a folder of a selected document type under the created file name, and stores management data in the management file (step 105). Then, the program is ended.

For example, when the user has selected the account book e-document scan on an e-document scanning execution screen illustrated in Fig. 8, an account book file name is created by "account book", "date", and "consecutive number". Then, the scanned data and the timestamp are stored in an account book folder of the e-document storage unit 22 under the created file name, and as illustrated in Fig. 5, the file name, a period of validity of the timestamp, and a period of storage of the e-document are stored in the management file. Further, a term of storage of a document can be designated for each document type, for example, ten years for account books, or five years for purchase orders. Therefore, the period of storage can be automatically decided according to a creation date of the e-document and the term of storage for the type of such e-document.

Meanwhile, when a determination is made at step 101 that the e-document scan has not been instructed, the CPU 11 determines whether or not the user has instructed facsimile transmission (step 106). When the CPU 11 determines that the user has not instructed facsimile transmission, other processing such as a copying is carried out (step 107). When a determination is made at step 106 that the user has instructed facsimile transmission, the CPU 11 scans the image data of the original by the scanning unit 15. Then, the scanned image data is compressed by the CODEC 18, and stored in the image memory 16 (step 108).

Next, the CPU 11 controls the MODEM 19 and NCU 20 to send a dial number of a designated destination to the PSTN 5 (step 109). When communication is established, the image data stored in the image memory 16 is converted into G3 data by the CODEC 18. The G3 data is modulated by the MODEM 19, and the modulated G3 data is transmitted by facsimile from the NCU 20 via the PSTN 5 to the destination (step 110). Then, when the facsimile transmission is completed, the CPU 11 stores a facsimile communication log, i.e. a facsimile transmission destination, transmission time, a number of transmitted sheets, and a communication result, etc. as a communication log in a facsimile communication log field of the RAM 13 (step 111).

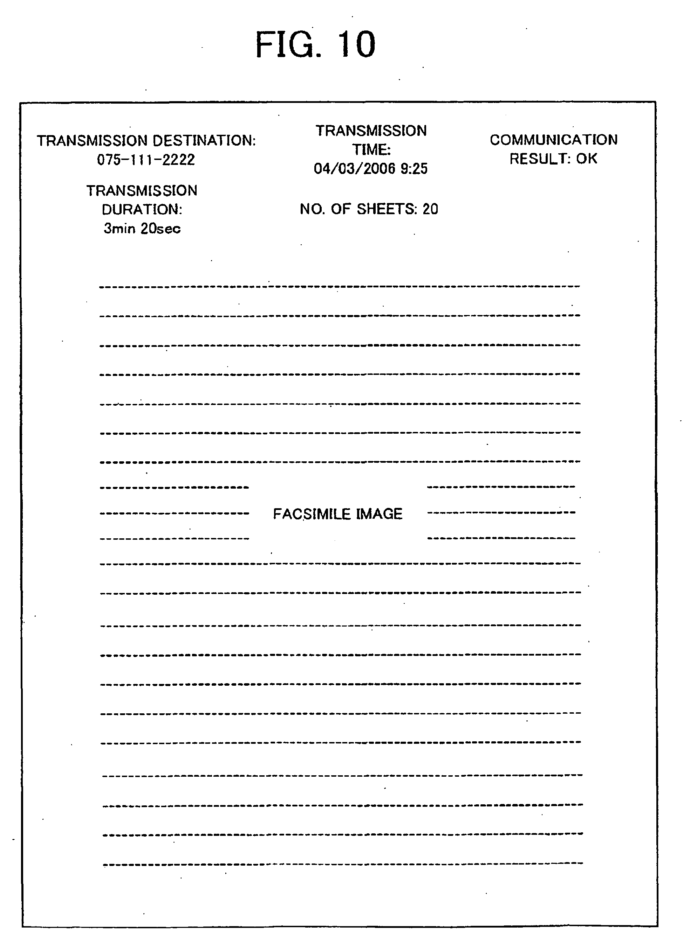

Next, the CPU 11 determines whether or not the "log e-document storing transmission" has been selected on the facsimile transmitting function selection screen illustrated in Fig. 6 (step 112). When the CPU 11 determines that the "log e-document storing transmission" has not been selected, the CPU 11 ends the program. When the CPU 11 determines that the "log e-document storing transmission" has been selected at step 112, the CPU 11 encodes the communication log stored in the RAM 13, and generates data in the same format as the scanned data (step 113). The generated communication log data and the image data transmitted by facsimile are composed to generate log file data illustrated in Fig. 10 (step 114).

After generating the log file data, the CPU 11 calculates a hash value of the generated log file data, and transmits the calculated hash value data to the TSA 8 via the LAN interface 21, the LAN 6, and the Internet network 7 (step 115). Then, the CPU 11 determines whether or not a timestamp has been received from the TSA 8 (step 116). When receiving the timestamp from the TSA 8, the CPU 11 creates a file name by "log", "date", and "consecutive number". Then, the CPU 11 stores the log file data and the timestamp in the communication log folder of the e-document storage unit 22 under the created file name, and stores the file name, a period of validity, and a period of storage in the management file.

Thus, since the communication log can be assigned with the timestamp and stored in the e-document storage unit 22, transmission time of the facsimile transmission can be certified, and a fact that the communication log has not been altered can be also certified. In addition, at this time, the image data transmitted by facsimile is also stored, and accordingly, along with the communication log, a fact that the transmitted image data has not been altered can be confirmed.

(Second Preferred Embodiment) In the above-described preferred embodiment, by assigning the timestamp to the communication log and storing the communication log assigned with the timestamp, the transmission time can be certified. Furthermore, by assigning time and/or the timestamp acquired from the TSA 8 to the transmission report, the transmission time can also be certified. A description will be made of another preferred embodiment in which a transmission report that displays credible time is printed by assigning the time acquired from the TSA 8 to the transmission report. Except that a folder for transmission reports is provided in the e-document storage unit 22, a device configuration is similar to configurations illustrated in Figs. 1 to 3, and accordingly, a detailed description will be omitted.

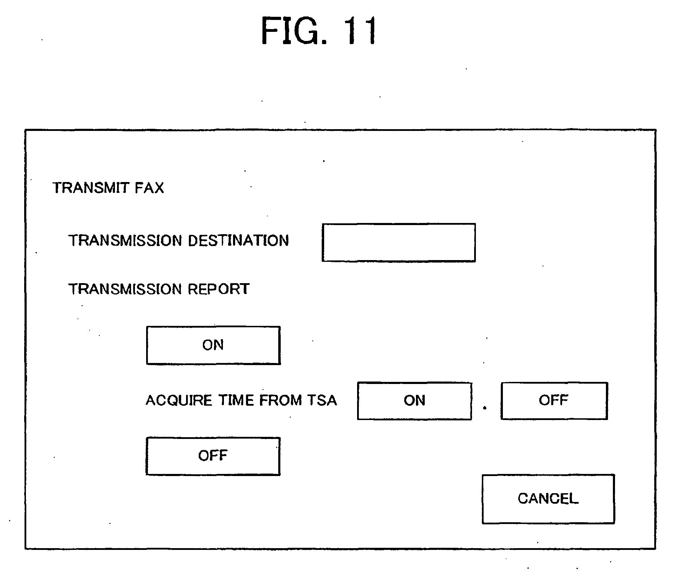

When carrying out facsimile transmission, a user sets an original to be transmitted on the scanning unit 15, and presses the FAX switching key 40 on the display and operation unit 14. Accordingly, a facsimile transmitting function selection screen illustrated in Fig. 11 is displayed on the LCD display unit 31. On the facsimile transmitting function selection screen, a transmission report ON and OFF selection field is displayed along with a transmission destination input field as illustrated in Fig. 11. By pressing a transmission report "ON" button, a transmission report can be printed out. By pressing an "ON" button for acquiring time from the TSA 8, a transmission report assigned with time acquired from the TSA 8 can be printed out.

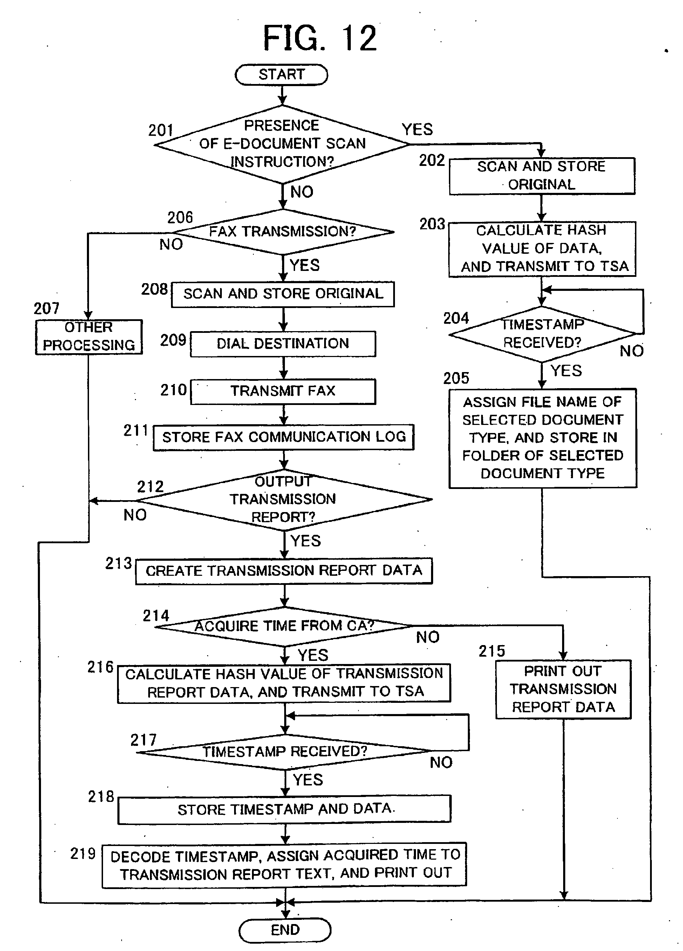

Next, with reference to a flowchart of Fig. 12, a description will be made of an operation of the CPU 11 carried out when the start key 33 is pressed according to the present preferred embodiment. Since operations at steps 201 through 211 in the flowchart of Fig. 12 are similar to the operations at steps 101 through 111 in the flowchart of Fig. 9, a description thereof will be omitted. A description will be made of step 212 and subsequent steps.

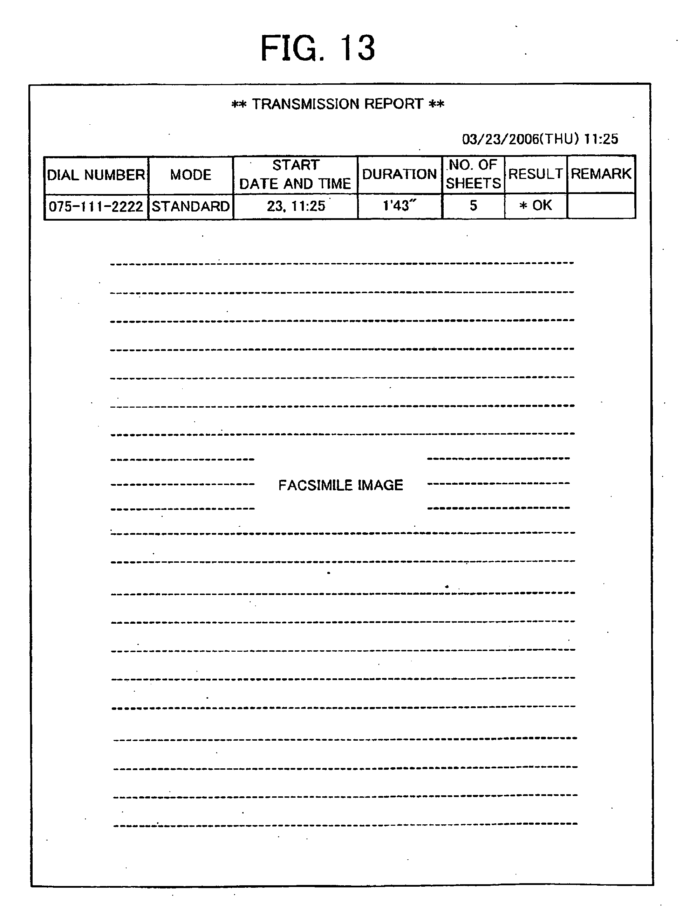

When storing the communication log in the facsimile communication log field of the RAM 13, the CPU 11 determines whether or not printing out of the transmission report has been selected on the facsimile transmitting function selection screen illustrated in Fig. 11 (step 212). When the CPU 11 determines that the printing out of the transmission report has not been selected, the CPU 11 ends the program. When the CPU 11 determines that the printing out of the transmission report has been selected, the CPU 11 generates transmission report text data from the communication log stored in the RAM 13, and composes the transmission report text data and the image data transmitted by facsimile to generate transmission report data illustrated in Fig. 13 (step 213). Then, the CPU 11 determines whether or not a selection has been made on the facsimile transmitting function selection screen illustrated in Fig. 11 for acquiring time from the TSA 8 (step 214). When the CPU 11 determines that a selection has not been made to acquire time from the TSA 8, the CPU 11 prints out the transmission report data illustrated in Fig. 13 (step 215), and ends the program.

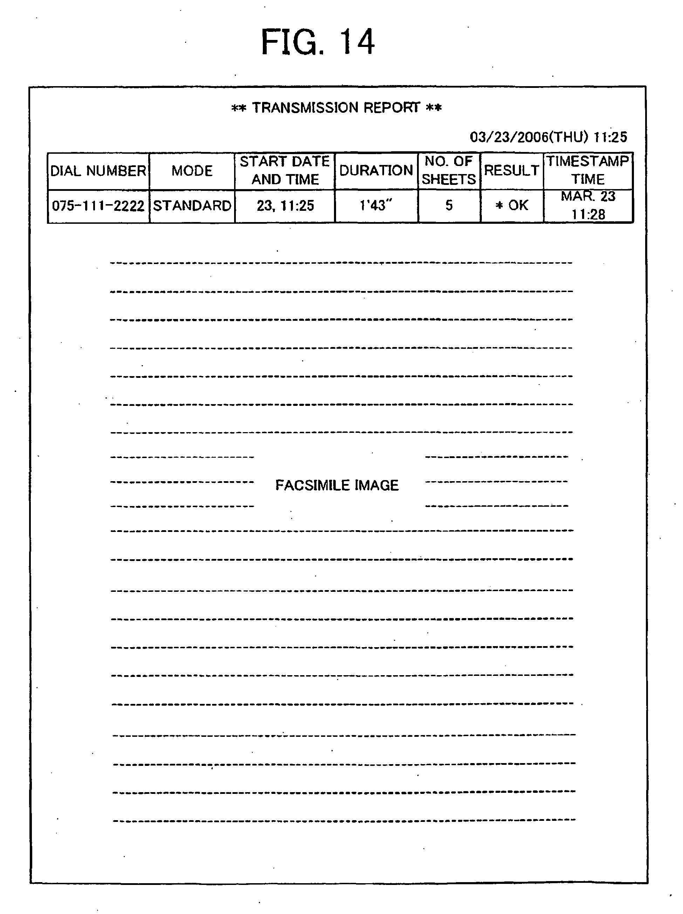

Meanwhile, when the CPU 11 determines that a selection has been made at step 214 to acquire time from the TSA 8, the CPU 11 calculates a hash value of the transmission report data, and transmits the calculated hash value data to the TSA 8 via the LAN interface 21, the LAN 6, and the Internet network 7 (step 216). Then, the CPU 11 determines whether or not a timestamp has been received from the TSA 8 (step 217). When receiving the timestamp from the TSA 8, the CPU 11 creates a file name by "transmission report", "date", and "consecutive number". Then, the CPU 11 stores the transmission report data and the timestamp in the transmission report folder of the e-document storage unit 22 under the created file name, and stores the file name, a period of validity, and a period of storage in the management file (step 218). Next, the CPU 11 decodes the acquired timestamp to extract the time acquired from the TSA 8, assigns the extracted time to the transmission report text data, composes the transmission report text data and the image data transmitted by facsimile, and prints out both of the data as illustrated in Fig. 14 (step 219).

As described above, a transmission report added with time acquired from the TSA 8 can be printed out. Therefore, credibility of the time recorded on the transmission report can be increased, and since the transmission report data and the timestamp are stored in the e-document storage unit 22, a fact that the transmission report and the transmission time have not been altered can be confirmed at a later date. In addition, as described above, since the image data transmitted by facsimile is also stored, a fact that the transmitted image data has not been altered can be confirmed.

In the above-described preferred embodiment, the transmission report assigned with the time acquired from the TSA 8 is printed out. However, a transmission report assigned with a timestamp acquired from the TSA 8 may also be printed out. In such a case, without storing the timestamp and the transmission report data in the e-document storage unit 22, the timestamp and the transmission report data may be printed out. Further, in the above-described preferred embodiment, a description has been made of the digital MFP as an example of the communication terminal device with the timestamp function of the present invention. However, the communication terminal device with the timestamp function of the present invention can also be applied to a conventional facsimile device, etc.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true scope of the present invention.

## Claims

1. A communication terminal device (1) with a timestamp function, the communication terminal device comprising:
a communication means for transmitting a document;
a time certified document storing means (22) for storing a time certified document; and
a control means (11) for assigning a timestamp to a document and storing the document assigned with the timestamp in the time certified document storing means,
**characterised in that**: when transmitting a document, the control means assigns a timestamp to one of a data file including the transmitted document and a communication log added to the transmitted document or transmission report data of the document, and stores one of the data file or the transmission report data assigned with the timestamp in the time certified document storing means; wherein;
said control means is arranged to assign a period for which the stored data file or transmission report data, to which a timestamp has been assigned, is stored in said time certified document storage means, and also arranged to assign a period for which the timestamp assigned to the storage data is valid.

2. A device (1) according to Claim 1, wherein said period for which the stored data file or transmission report data, to which a timestamp has been assigned, is stored in said storage means, is user designated.

3. A device (1) according to Claim 1 or 2, wherein said control means (11) is arranged to acquire said timestamp from a time stamping authority (8).

## Patentansprüche

1. Kommunikationsendgerät (1) mit einer Zeitstempelfunktion, wobei das Kommunikationsendgerät Folgendes umfasst:
ein Kommunikationsmittel zum Senden eines Dokuments;
ein Zeitlich-Zertifiziertes-Dokument-Speichermittel (22) zum Speichern eines zeitlich zertifizierten Dokuments; und
ein Steuermittel (11) zum Zuordnen eines Zeitstempels zu einem Dokument und zum Speichern des Dokuments mit dem zugeordneten Zeitstempel in dem Mittel zum Speichern eines zeitlich zertifizierten Dokuments,
dadurch gekennzeichet, dass das Steuermittel, beim Senden eines Dokuments, einem der Folgenden einen Zeitstempel zuordnet: einer Datendatei, die das gesendete Dokument und ein dem gesendeten Dokument hinzugefügtes Kommunikationsprotokoll enthält, oder Sendeberichtsdaten des Dokuments, und die Datendatei oder die Sendeberichtsdaten mit zugeordnetem Zeitstempel in dem Mittel zum Speichern eines zeitlich zertifizierten Dokuments speichert, wobei
das genannte Steuermittel die Aufgabe hat, eine Periode zuzuordnen, für die die gespeicherte Datendatei oder die gespeicherten Sendeberichtsdaten mit zugeordnetem Zeitstempel in dem genannten Mittel zum Speichern eines zeitlich zertifizierten Dokuments gespeichert wird/werden, und auch die Aufgabe hat, eine Periode zuzuordnen, für die der den Speicherdaten zugeordnete Zeitstempel gültig ist.

2. Gerät (1) nach Anspruch 1, wobei die genannte Periode, für die die gespeicherte Datendatei oder die gespeicherten Sendeberichtsdaten mit zugeordnetem Zeitstempel in dem genannten Speichermittel gespeichert wird/werden, vom Benutzer bestimmt wird.

3. Gerät (1) nach Anspruch 1 oder 2, wobei das genannte Steuermittel (11) die Aufgabe hat, den genannten Zeitstempel von einer Zeitstempelbehörde (8) einzuholen.

## Revendications

1. Un dispositif terminal de communication (1) muni d'une fonction de timbre à date, le dispositif terminal de communication comprenant :
un moyen de communication destiné à transmettre un document,
un moyen (22) de conservation en mémoire d'un document certifié d'un point de vue temporel destiné à conserver en mémoire un document certifié d'un point de vue temporel, et
un moyen de commande (11) destiné à attribuer un timbre à date à un document et à placer en mémoire le document auquel le timbre à date à été attribué dans le moyen de conservation en mémoire d'un document certifié d'un point de vue temporel,
**caractérisé en ce que** : lors de la transmission d'un document, le moyen de commande attribue un timbre à date à un élément parmi un fichier de données contenant le document transmis et un journal de communication ajouté au document transmis, ou des données de rapport de transmission du document, et place en mémoire un élément parmi le fichier de données ou les données de rapport de transmission auquel le timbre à date a été attribué dans le moyen de conservation en mémoire d'un document certifié d'un point de vue temporel, où
ledit moyen de commande est agencé de façon à attribuer une période pendant laquelle le fichier de données ou les données de rapport de transmission conservés en mémoire, auxquels un timbre à date a été attribué, sont conservés en mémoire dans ledit moyen de conservation en mémoire d'un document certifié d'un point de vue temporel, et également agencé de façon à attribuer une période pendant laquelle le timbre à date attribué aux données conservées en mémoire est valide.

2. Un dispositif (1) selon la Revendication 1, où la période pendant laquelle le fichier de données ou les données de rapport de transmission conservés en mémoire, auxquels un timbre à date a été attribué, sont conservés en mémoire dans ledit moyen de conservation en mémoire, est désignée par l'utilisateur.

3. Un dispositif (1) selon la Revendication 1 ou 2, où ledit moyen de commande (11) est agencé de façon à acquérir ledit timbre à date auprès d'une autorité d'établissement de timbres à date (8).
